# EUROPÄISCHE PATENTSCHRIFT

(11) **EP 1 921 960 B1**
(45) Veröffentlichungstag und Bekanntmachung des Hinweises auf die Patenterteilung: **09.12.2009**
(21) Anmeldenummer: 06778232.6
(22) Anmeldetag: 14.08.2006
(51) Int. Cl.: A47J 43/08, A21C 1/02

(54) **ELEKTROMOTORISCHES KÜCHENGERÄT MIT EINEM PLANETENGETRIEBE**
ELECTRIC-MOTOR DRIVEN KITCHEN APPLIANCE COMPRISING A PLANETARY GEAR
APPAREIL DE CUISINE A MOTEUR ELECTRIQUE PRESENTANT UN ENGRENAGE PLANETAIRE

(30) Priorität: 26.08.2005 DE 102005040545
(43) Veröffentlichungstag der Anmeldung: 21.05.2008
(73) Patentinhaber: BSH Bosch und Siemens Hausgeräte GmbH, 81739 München (DE)
(72) Erfinder: PESEC, Jurij, 3301 Petrovce (SI)
(86) Internationale Anmeldenummer: PCT/EP2006/065284
(87) Internationale Veröffentlichungsnummer: WO 2007/023102

(56) Entgegenhaltungen:
- DE-A1- 2 551 842
- US-A- 1 475 978
- US-A- 2 024 282
- US-A- 2 185 155
- US-A- 2 334 775

## Beschreibung

Die Erfindung betrifft ein elektromotorisches Küchengerät, insbesondere eine elektromotorische Solo- oder Universalküchenmaschine, umfassend ein Planetengetriebe, welches mindestens ein Planetenrad mit einer Planetenradachse und ein Sonnenrad mit einer Sonnenradachse aufweist, und einen Elektromotor mit einer Motorwelle, die sich entlang einer Motordrehachse erstreckt, wobei die Motorwelle und das Planetengetriebe mit einer drehungsübertragenden Verbindung miteinander gekoppelt sind.

DE 25 51 842 beschreibt ein elektromotorisch betriebenes Antriebsaggregat für Küchenmaschinen mit einem eine Kegelradverzahnung aufweisenden Planetengetriebe, dessen Planetenrad mit einer geneigten Achse umläuft und mit seiner Achse die Achse des Zentralrades schneidet, wobei mit Hilfe des Planetengetriebes eine Taumelbewegung des angetriebenen Werkzeugs um das Zentralrad bewirkt wird. US 1 475 978 A offenbart ein Küchengerät. welches von einem Elektromotor angetrieben wird. US 2 185 155 A offenbart ebenfalls eine elektrisch angetrieben Küchenmaschine, die mit Hilfe eines Planetenkopfes angetrieben wird. US 2 024 282 A offenbart eine Küchenmaschine. US 2 334 775 zeigt eine Kraftübertragungsvorrichtung, die beispielsweise bei einer Küchenmaschine Anwendung finden kann. Schließlich beschreibt DE 25 51 842 A1 ein elektromotorisch angetriebenes Antriebsaggregat, insbesondere für Küchenmaschinen.

Küchengeräte werden im Haushalt für vielfältige Zwecke eingesetzt und es ist wünschenswert, dass ein Antriebsaggregat für ein Küchengerät möglichst klein, d. h. kompakt, leicht und dennoch leistungsfähig ist. Insbesondere für Werkzeuge wie Knethaken sind besonders niedrige Umdrehungsfrequenzen erforderlich, die weit unterhalb einer Betriebsfrequenz eines üblichen, für ein Küchengerät verwendbaren Elektromotors liegen. Es ist möglich, Motoren zu bauen, die hinreichend niedrige Drehfrequenzen haben, doch sind derartige Motoren in der Regel vergleichsweise groß und schwer. Aus diesen Gründen ist ein Übersetzungsgetriebe erforderlich, mit dem die Motorfrequenz auf die erforderliche Werkzeugfrequenz herabgesetzt werden kann.

Aus dem Stand der Technik sind Überhitzungsprobleme an den verwendeten Getriebestufen aufgrund von Reibung, insbesondere wenn das Küchengerät über einen längeren Zeitraum ununterbrochen stark belastet wird, bekannt. DE 33 19 531 A1 sieht eine Küchenmaschine vor, die eine Antriebswelle aufweist, welche mit wenigstens zwei elektromotorisch angetriebenen Schneckengetrieben in Wirkverbindung steht, die das geforderte Drehmoment gemeinschaftlich auf die Arbeitswelle übertragen. Mit einer derartigen Anordnung wird die Beanspruchung einer einzelnen Getriebeschnecke erheblich reduziert und somit der Verschleiß bzw. auch die thermische Belastung der Getriebestufe verringert. Eine derartige Anordnung verwendet jedoch eine vergleichsweise komplexe Getriebestufe.

Es ist Aufgabe der vorliegenden Erfindung, ein elektromotorisches Küchengerät bereitzustellen, welches möglichst kompakt und einfach strukturiert ist, zuverlässig arbeitet und eine Übertragung großer Drehmomente sowohl bei größeren als auch bei kleineren Drehfrequenzen auch im Dauerbetrieb ermöglicht.

Diese Aufgabe wird erfindungsgemäß gelöst durch das elektromotorische Küchengerät wie in dem unabhängigen Anspruch angegeben. Weitere vorteilhafte Ausgestaltungen und Weiterbildungen, die jeweils einzeln angewandt oder beliebig miteinander kombiniert werden können, sind Gegenstand der abhängigen Ansprüche.

Das erfindungsgemäße elektromotorische Küchengerät, insbesondere die elektromotorische Solo- und/oder Universalküchenmaschine, umfassend ein Planetengetriebe, welches mindestens ein Planetenrad mit einer Planetenradachse und ein Sonnenrad mit einer Sonnenradachse aufweist), wobei das Sonnenrad mit dem mindestens einem Planetenrad in Eingriff steht, und einen Elektromotor mit einer Motorwelle, die sich entlang einer Motordrehachse erstreckt, sieht vor, dass die drehungsübertragende Verbindung ein Stirnradgetriebe mit einem ersten und einem zweiten Stirnrad und/oder ein Kegelradgetriebe mit einem ersten und einem zweiten Kegelrad umfasst, wobei das zweite Stirnrad und/oder das zweite Kegelrad das Sonnenrad des Planetengetriebes antreibt. Hierbei ist insbesondere das Sonnenrad ein angetriebenes Zahnrad und die Stirnradwelle des ersten Stirnrades und die Stirnradwelle des zweiten Stirnrades sind im Wesentlichen parallel zueinander angeordnet. Bei dem Kegelrad steht die Kegelradwelle des ersten Kegelrads insbesondere im Wesentlichen senkrecht zu der Kegelradwelle des zweiten Kegelrads. Mit Hilfe des Kegelradgetriebes bzw. des Stirnradgetriebes können große Drehmomente vergleichsweise reibungs- bzw. verschleißarm auch über einen langen Zeitraum unter starker Last übertragen werden. Mit Hilfe des Stirnradgetriebes bzw. des Kegelradgetriebes können große Drehmomente gut aufgenommen werden, da die Getriebeflächen vergleichsweise groß sind, wodurch ein Abrieb bzw. eine Wärmeentwicklung in der Getriebestufe verringert wird.

Vorteilhafterweise weist das Stirnradgetriebe bzw. das Kegelradgetriebe ein Übersetzungsverhältnis in einem Bereich von 10 bis 40, insbesondere in einem Bereich von 20 bis 30, auf. Hierdurch ist es möglich, die Übersetzung mit dem Kegelradgetriebe bzw. dem Stirnradgetriebe zu erreichen und ein Schneckenradgetriebe für das erforderlichere Übersetzungsverhältnis ist nicht erforderlich. Es hat sich gezeigt, dass Schneckengetriebe mit einem Übersetzungsverhältnis von mehr als 1:4 eine vergleichsgroße Reibwirkung aufweisen, welches zu den beschriebenen Problemen der Hitzeentwicklung und Verschleiß führt.

In einer vorteilhaften Ausgestaltung weist die drehungsübertragende Verbindung ein Schneckengetriebe mit einer Getriebeschnecke und einem Schneckenrad oder ein Stirnschraubradgetriebe mit einem ersten und einem zweiten Stirnschraubrad auf, wobei das Schneckengetriebe bzw. das Stirnschraubradgetriebe ein Übersetzungsverhältnis in einem Bereich von 0,5 bis 4, insbesondere in einem Bereich von 1 bis 2, aufweist. Es hat sich gezeigt, dass die räumliche Anordnung eines Schneckengetriebes bzw. Stirnschraubradgetriebes für ein kompakt zu gestattendes Küchengerät zwar vorteilhaft ist, das Übersetzungsverhältnis jedoch in etwa bei 1:1 liegen sollte, um die mechanische Reibung in einem vertretbaren Rahmen zu halten.

Vorteilhafterweise sitzt die Getriebeschnecke bzw. das erste Stirnschraubrad auf der Motorwelle.

Das Sonnenrad kann eine Sonnenradwelle aufweisen, auf der ein zweites Kegelrad sitzt.

Vorteilhafterweise stehen die jeweiligen Getriebewellen des Schneckengetriebes, die jeweiligen Getriebewellen des Stirnschraubradgetriebes bzw. die jeweiligen Getriebewellen des Kegelradgetriebes im Wesentlichen senkrecht aufeinander bzw. die jeweiligen Getriebewellen des Stirnradgetriebes im Wesentlichen parallel zueinander. Hierdurch wird eine besonders günstige Anordnung der Getriebegeometrie für das Küchengerät erzielt. Die Sonnenradachse steht insbesondere im Wesentlichen senkrecht auf der Motordrehachse und ist mit dieser koplanar. Durch die Koplanarität von Sonnenradachse und Motordrehachse wird ein besonders kompakter Aufbau der Elektromotor-Getriebe-Stufen-Anordnung erzielt, die eine besonders kompakte Gestaltung des Haushaltsgeräts erlaubt und für den Gebrauch im Haushalt besonders vorteilhaft ist.

Zur Aufnahme von Gegenkräften weist das Schneckengetriebe ein Schneckengegenrad, das Stirnschraubgetriebe ein Stirnschraubgegenrad bzw. das Kegelradgetriebe ein Kegelgegenrad auf, welches in Bezug auf die Getriebeschnecke, das erste Stirnschraubrad, bzw. das erste Kegelrad jeweils dem Schneckengegenrad, dem zweiten Stirnschraubrad bzw. dem zweiten Kegelrad gegenüberliegt und mit der Getriebeschnecke, dem ersten Stirnschraubrad bzw. dem ersten Kegelrad in Eingriff gelangt. Hierdurch wird sichergestellt, dass die Getriebeschnecke, das erste Stirnschraubrad bzw. das erste Kegelrad seitlich nicht ausscheren bzw. ausbrechen kann, wenn an dem Küchengerät eine starke Last angelegt wird. In der Folge wird auch der Abrieb in dem jeweiligen Getriebe verlängert.

Das Planetengetriebe weist insbesondere ein zu dem Sonnenrad koaxial angeordnetes Hohlrad auf. Das Hohlrad ist ein konzentrisch zum Sonnenrad angeordneter, innen verzahnter äußerer Zahnkranz, der mit den Planetenrädern kämmt. Das Hohlrad ist vorteilhafterweise stationär und mit einem Gerätegehäuse des Küchengeräts drehfest verbunden. Das Hohlrad bildet somit ein abgetriebenes Zahnrad in der Weise, dass die Planetenräder sich um ihre jeweils eigene Planetenradachse drehend auf einer Kreisbahn rotieren.

Vorteilhafterweise ist das Hohlrad, die Planetenräder, und/oder das Sonnenrad kegelförmig, so dass die Plantetenräder um ihre jeweils eigene Planetenradachse sich drehend eine Taumelbewegung auf einer Kegeloberfläche durchführen.

Die Planetenradachse und die Sonnenradachse schneiden sich vorteilhafterweise unter einem Winkel in einem Bereich von 30° bis 80°, insbesondere in einem Bereich von 20° bis 35°, vorzugsweise in einem Bereich von 25° bis 30°. Derartige Winkel sind bevorzugt, damit ein in das Küchengerät eingestecktes Werkzeug, wie z. B. ein Rührbesen oder ein Knethaken, eine in einem Mixerbehälter optimale Wirkung entfalten kann.

Es können mindestens 2, insbesondere mindestens 3, Planetenräder vorgesehen sein.

Das Planetenrad weist insbesondere eine Planetenradachse auf und das Übersetzungsverhältnis zwischen einer Umdrehung um die Sonnenradachse und einer Umdrehung um die Planetenradachse liegt vorteilhafterweise in einem Bereich von 1:1 bis 1:10, insbesondere in einem Bereich von 1:2 bis 1:5. Bei derartigen Übersetzungsverhältnissen wird eine optimale Wirkung eines in das Küchengerät eingesteckten Werkzeuges bei üblichen auf Leistung und Kompaktheit für ein Küchengerät optimierte Elektromotoren erzielt.

Der Elektromotor weist insbesondere eine maximale nominelle Umlauffrequenz in einem Bereich von 8.000 Umdrehungen/Minute bis 20.000 Umdrehungen/Minute, insbesondere in einem Bereich von 10.000 Umdrehungen/Minute bis 15.000 Umdrehungen/Minute, auf. Derartige Motoren sind handlich, leicht, zuverlässig und arbeiten vergleichsweise geräuscharm. Sie sind preiswert herzustellen und liefern eine ausreichende mechanische Leistung und ein hinreichend großes Anlaufsdrehmoment, wie es für ein Küchengerät erforderlich ist.

Vorteilhafterweise weist mindestens ein Planetenrad eine Aufnahme für ein Werkzeug, insbesondere ein Pürier-, Misch-, Häcksel-, Knet-, und/oder Schneid-, und/oder ein Schlag- bzw. Rührbesen auf. Mit Hilfe der vorgeschlagenen Getriebestufe können somit auf einfacher Weise eine vergleichsweise verlustarme Drehmomentübertragung mit einem großen Übersetzungsverhältnis zwischen Elektromotor und Werkzeug erreicht werden, welches einen zuverlässigen Betrieb über einen längeren, unterbrochenen Zeitraum selbst bei starker Belastung des Küchengeräts ermöglicht.

Weitere vorteilhafte Einzelheiten und Ausgestaltungen, die jeweils einzeln angewandt oder beliebig miteinander kombiniert werden können, werden anhand der folgenden Zeichnung, welche die Erfindung nicht einschränken, sondern lediglich exemplarisch illustrieren soll, näher erläutert.

Es zeigen schematisch:
- Fig. 1: ein erfindungsgemäßes Küchengerät in einer perspektivischen Schrägansicht seitlich von oben;
- Fig. 2: eine Elektromotor-Getriebestufen-Anordnung des erfindungsgemäßen Küchengeräts in einer perspektivischen Schrägansicht beim Verbinden des Elektromotors mit einer Getriebestufe;
- Fig. 3: die Elektromotor-Getriebestufen-Anordnung nach Fig. 2 nach vollendeter Vormontage;
- Fig. 4: die Elektromotor-Getriebestufen-Anordnung nach den Figuren 2 und 3 vor einem Zusammenbau des Elektromotors mit der Getriebestufe;
- Fig.5: eine weitere Elektromotor-Getriebestufen-Anordnung für ein erfindungsgemäßes Küchengerät vor der Vormontage des Elektromotors mit der Getriebestufe;
- Fig. 6: eine Elektromotor-Getriebestufen-Anordnung nach Figuren 2 bis 5 mit Verstärkungsrahmen;
- Fig. 7: den Verstärkungsrahmen nach Fig. 6;
- Fig. 8: einen Längsschnitt durch die Elektromotor-Getriebestufen-Anordnung nach einer der Figuren 2 bis 6 mit einer vertikalen Schnittebene;
- Fig. 9: einen Längsschnitt der Elektromotor-Getriebestufen-Anordnung nach einer der Figuren 2 bis 6 oder 8 in einem Längsschnitt mit einer waagerechten Schnittebene;
- Fig. 10: eine weitere Ausführungsform einer Elektromotor-Getriebestufen-Anordnung des erfindungsgemäßen Küchengeräts im Längsschnitt mit einer vertikalen Schnittebene;
- Fig. 11: einen senkrecht zur Motorendrehachse verlaufender Querschnitt durch eine Getriebestufe eines erfindungsgemäßen Küchengeräts;
- Fig 12: eine schematische Draufsicht einer Getriebestufenanordnung eines erfindungsgemäßen Küchengeräts;
- Fig. 13: einen Längsschnitt durch eine Elektromotor-Getriebestufen-Anordnung eines erfindungsgemäßen Küchengeräts mit einer vertikalen Schnittebene.

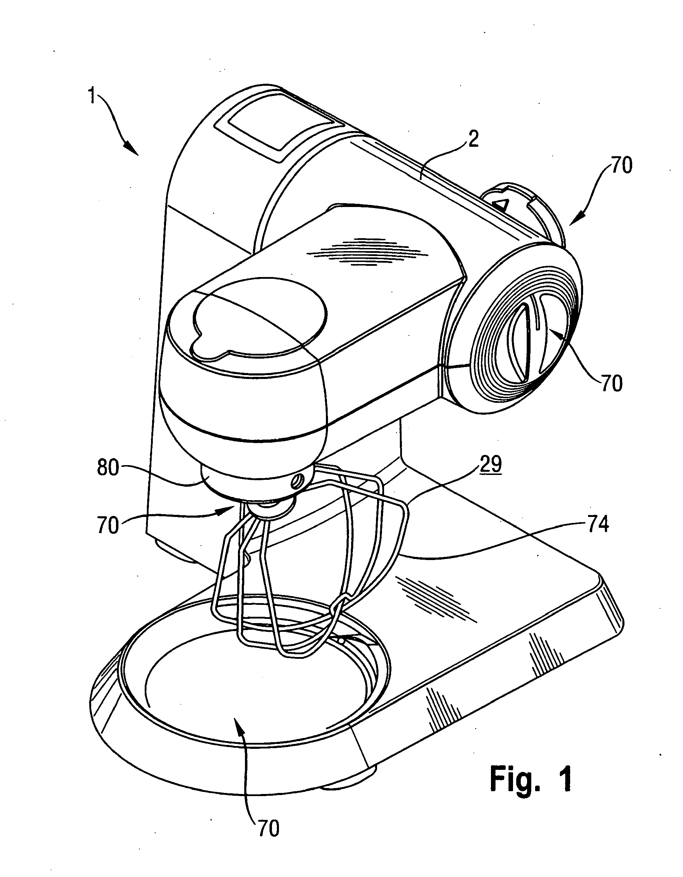

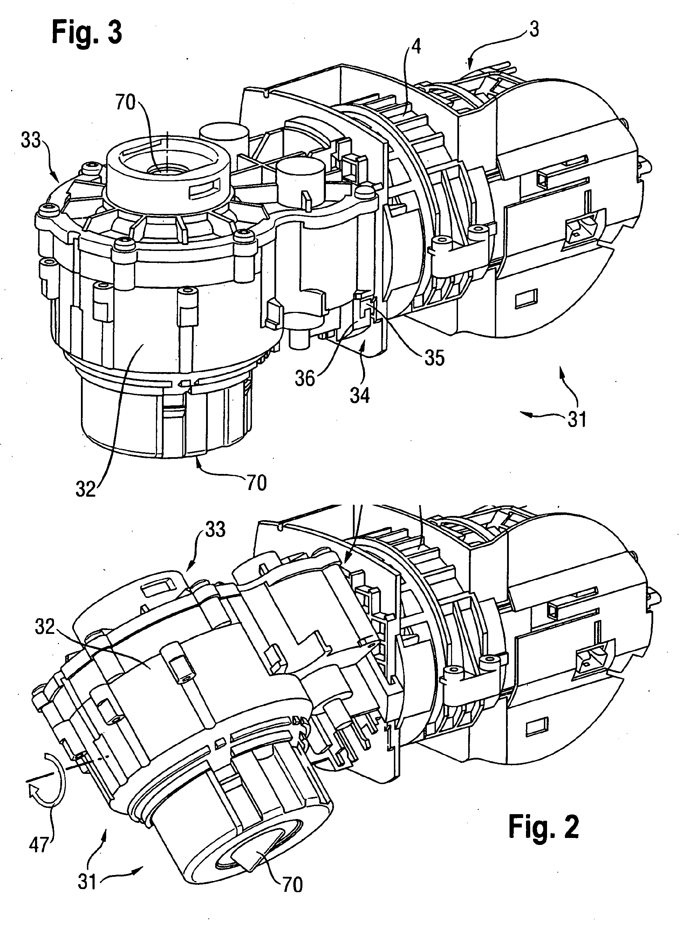

Fig. 1 zeigt ein erfindungsgemäßes Küchengerät 1 in einer perspektivischen Schrägansicht seitlich von oben mit einem Gerätegehäuse 2 und vier verschiedenen Aufnahmen 70 für ein Werkzeug 29, welches als Rührbesen 74 ausgestaltet sein kann. Hierbei sind drei der vier Aufnahmen 70 mit dem Elektromotor 3 (siehe Fig. 2 bis 6) antreibbar.
Fig. 2 zeigt eine Elektromotor-Getriebestufen-Anordnung 31 des erfindungsgemäßen Küchengeräts 1 während einer Vormontage in einer perspektivischen Schrägansicht, wobei eine Getriebestufe 33 mit dem Elektromotor 3 verbunden wird, indem ein Getriebegehäuse 32 und ein Motorgehäuse 4 miteinander mit einem Bajonettverschluss 34 verbunden werden, indem das Getriebegehäuse 32 um einen Winkel verdreht auf das Motorgehäuse 4 aufgesetzt wird und durch Drehung entlang einer Drehrichtung 47 fixiert wird. Mit Hilfe des Bajonettverschlusses 34 ist eine mittels einer Dreh-Streckbewegung bewirkte, einfache aber zuverlässige Verbindung der Getriebestufe 33 mit dem Elektromotor 3 möglich.

Fig. 3 zeigt die Elektromotor-Getriebestufen-Anordnung 31 nach Fig. 2 in perspektivischer Ansicht, wobei die Getriebestufe 33 mit dem Bajonettverschluss 34 an dem Elektromotor 3 befestigt ist, indem ein erstes Bajonettverschlussteil 35 an dem Elektromotor 3 in ein entsprechend komplementär ausgestaltetes zweites Bajonettverschlussteil an der Getriebestufe 33 in Eingriff gelangt.

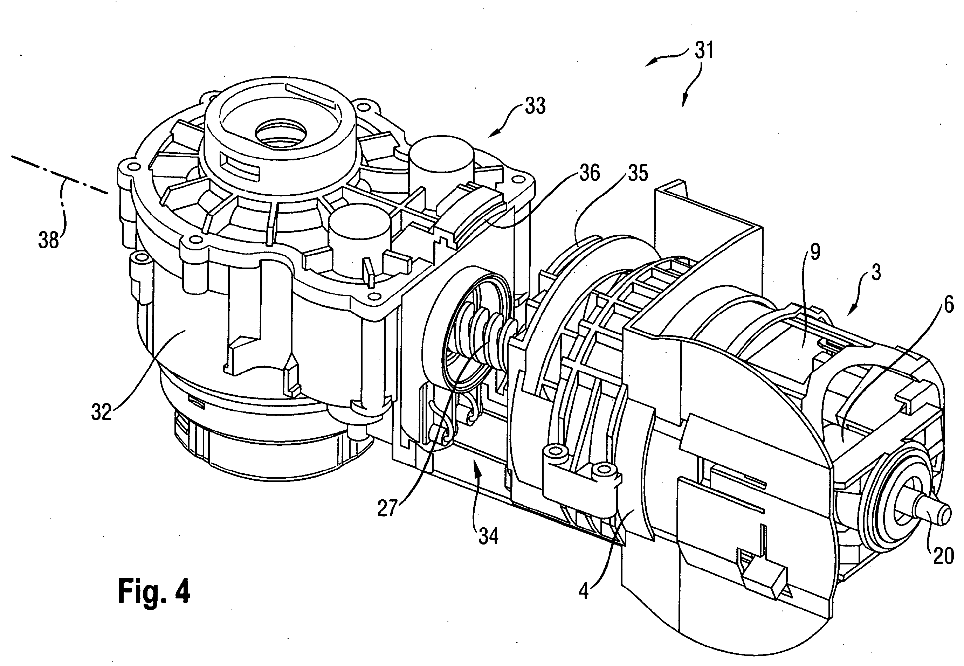

Fig. 4 zeigt eine weitere Elektromotor-Getriebestufen-Anordnung 31 des erfindungsgemäßen Küchengeräts 1 im Zustand unmittelbar vor der Vormontage in einer perspektivischen Schrägansicht, wobei der Elektromotor 3 und die Getriebestufe 33 entlang einer Verbindungslinie 38 zusammengeschoben werden, während eine Getriebeschnecke 27 des Elektromotors 3 in das Innere der Getriebestufe 33 eindringt, wobei durch Drehung der Getriebestufe 33 relativ zum Elektromotor um die Verbindungslinie 38 das erste Bajonettverschlussteil 35 am Elektromotor 3 in das zweite Bajonettverschlussteil 36 an der Getriebestufe 33 eingreift.

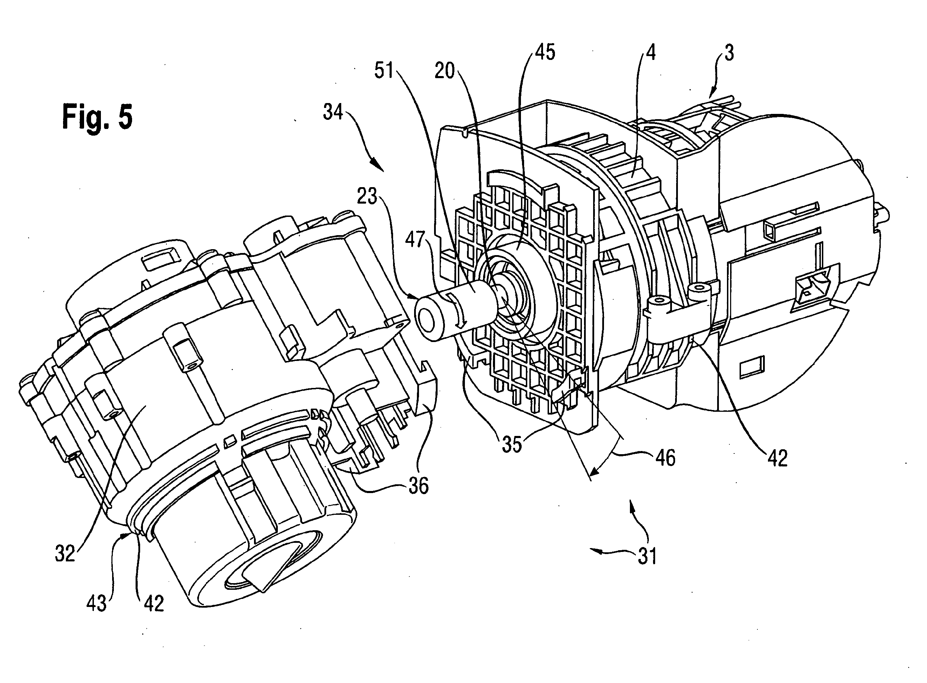

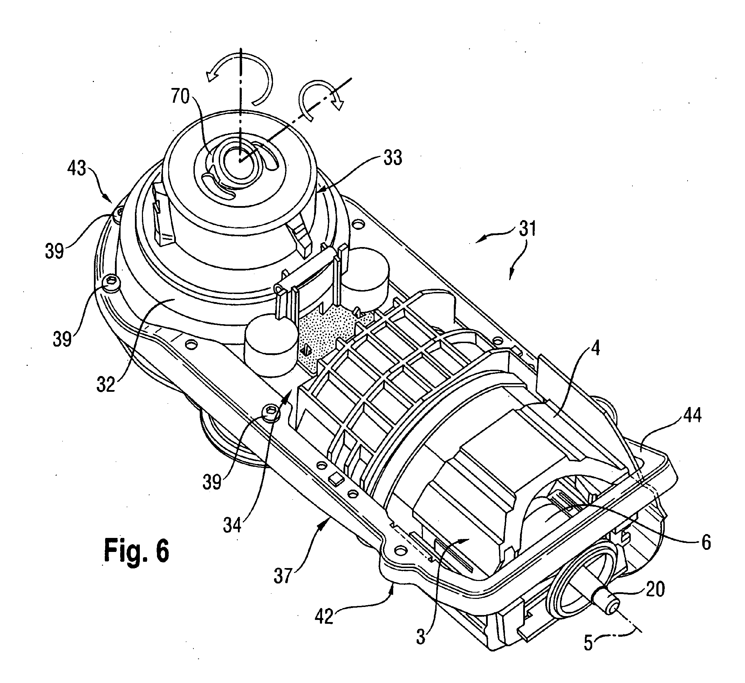

Fig. 5 zeigt eine Elektromotor-Getriebestufen-Anordnung 31 des erfindungsgemäßen Küchengeräts 1 bevor sie zusammengesetzt wird. Zum Verschließen des Bajonettverschlusses 34 wird das Getriebegehäuse 32 relativ zum Motorgehäuse 4 um einen Verschlusswinkel 46 von 30 ° gedreht, damit die am Motorgehäuse 4 befindlichen ersten Bajonettverschlussteile 35 in Eingriff mit den am Getriebegehäuse 32 befindlichen zweiten Bajonettverschlussteilen 36 gelangen. Auf einer Motorwelle 20 sitzt ein als erstes Stirnschraubrad 51 ausgestaltetes Getriebeelement 23, welches sich im Betrieb des Elektromotors 3 entlang der Drehrichtung 47 dreht, so dass die Drehung der Motorwelle 20 den Bajonettverschluss 34 im Betrieb fixiert. Das Getriebegehäuse 32 bzw. das Motorgehäuse 4 weist Verbindungsgegenelemente 42 auf, die als Verbindungsaufnahmen 43 ausgestaltet sind, um einen Verstärkungsrahmen 37 (siehe Fig. 6) mit entsprechenden Verbindungsvorsprüngen 41 aufzunehmen. Mit Hilfe des Verstärkungsrahmens 37 wird das Getriebegehäuse 32 zusätzlich gegenüber dem Motorgehäuse 4 stabilisiert.
Fig. 6 zeigt die Elektromotor-Getriebestufen-Anordnung 31 nach Fig. 5 im vormontierten Zustand in perspektivischer Schrägansicht, wobei der Verstärkungsrahmen 37 die Getriebestufe 33 und den Elektromotor 3 zusätzlich gegen eine Torsion relativ zueinander verstärkt. Der Verstärkungsrahmen 37 wird mit Hilfe von Schrauben 39 an dem Motorgehäuse 4 bzw. dem Getriebegehäuse 32 verschraubt. Hierzu ist der Verstärkungsrahmen 37, der eine L-Form aufweist, mit Hilfe von Verbindungsaufnahmen 43 am Motorgehäuse 4 bzw. am Getriebegehäuse 32 fixiert. Der Verstärkungsrahmen 37 ist als L-Profil ausgestaltet. Die Drehung der Motorachse 20 des Elektromotors 3 um die Motordrehachse 5 wirkt in Schließrichtung des Bajonettverschlusses 34, so dass sich die Getriebestufe 33 auch unter starker Last nicht von dem Elektromotor 3 lösen kann. Die Getriebestufe 33 weist eine Aufnahme 70 auf, die ein Werkzeug 29 wie z.B. einen Rührbesen 74 aufnehmen kann.

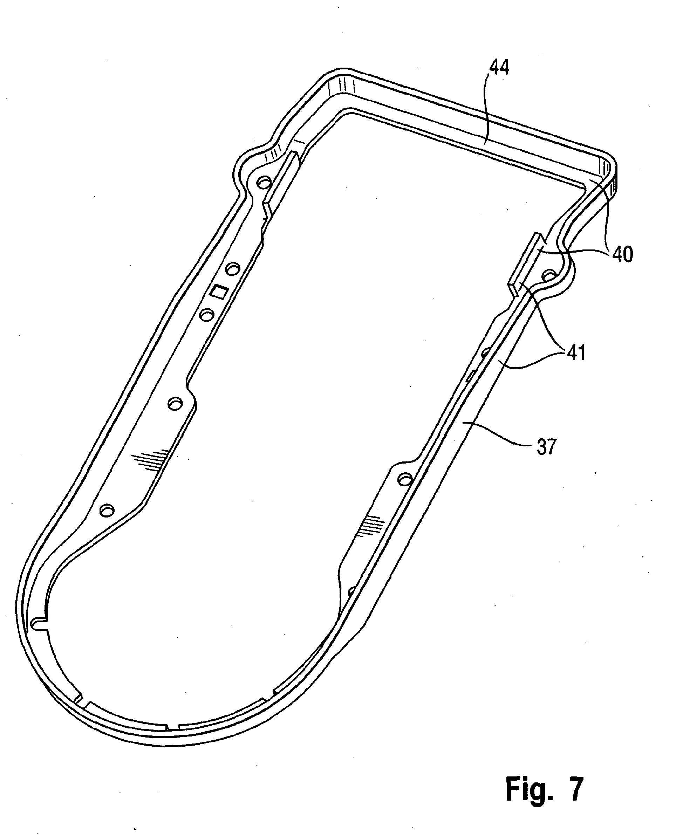

Fig. 7 zeigt den Verstärkungsrahmen 37 nach Fig. 6 in einer perspektivischen Schrägansicht. Der Verstärkungsrahmen 37 ist als L-Profil 44 mit entsprechenden Verbindungselementen 40 sowie Verbindungsvorsprüngen 41 ausgestaltet, damit er an dem Getriebegehäuse 32 bzw. dem Motorgehäuse 4 befestigt werden kann, wozu nur wenige Schrauben 39 erforderlich sind. Mit Hilfe des Verstärkungsrahmens können Drehmomente des Elektromotors 3 von etwa 20 Nm aufgenommen werden. Hierdurch wird eine besonders steife Konstruktion realisiert, die eine Vormontage der Elektromotor-Getriebestufen-Anordnung 31 ermöglicht, so dass ein Testen und Spezifizieren der Elektromotor-Getriebestufen-Anordnung 31 vor einem Einbau in ein Gerätgehäuse 2 des Küchengeräts 1 erfolgen kann.

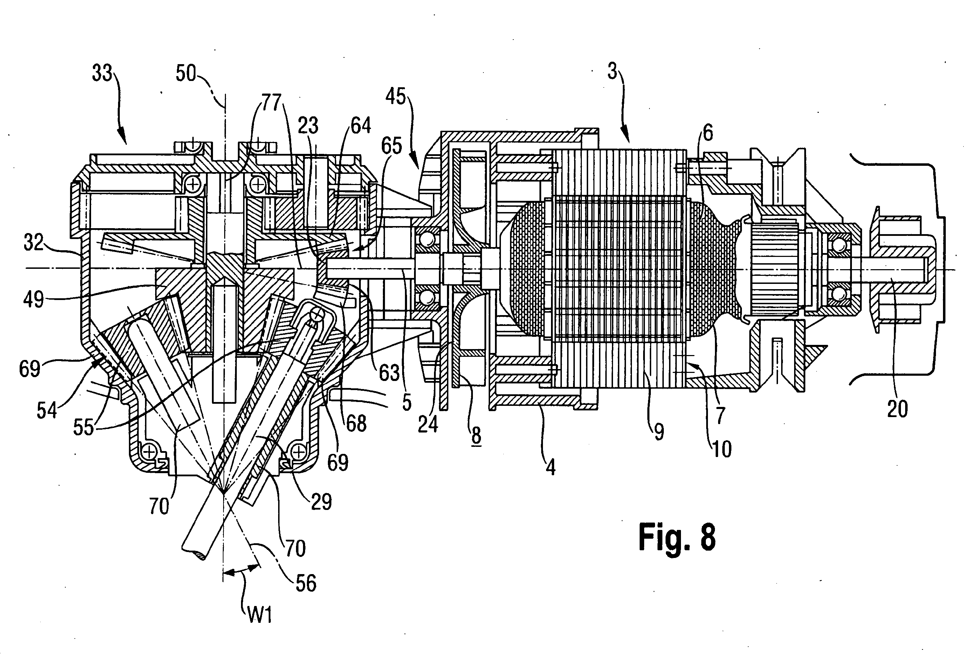

Fig. 8 zeigt einen Längsschnitt durch eine Elektromotor-Getriebestufen-Anordnung 31 mit einer vertikalen Schnittebene. Der Elektromotor 3 umfasst das Motorgehäuse 4, in dem ein Stator 9 mit entsprechenden Statorwicklungen 10 und einem darin beweglichen Rotor 6 mit entsprechenden Rotorwicklungen 7 angeordnet sind. Auf der Motorwelle 20 sitzt ein Kühlrad 24, welches als Lüfterrad 8 ausgestaltet ist. Durch die Dimensionierung des Kühlrads 24, insbesondere die Stärke des verwendeten Materials sowie die thermischen Eigenschaften des verwendeten Materials kann auch an den Rotorwicklungen 7 bzw. in der Getriebestufe 33 entwickelte Wärme durch Wärmeleitung abgeführt werden. An der Motorwelle 20 ist ein Getriebeelement 23 drehfest verbunden, welches als erstes Kegelrad 23 zusammen mit einem zweiten Kegelrad 64 der Getriebestufe 33 ein Kegelradgetriebe 65 bildet. Mit Hilfe des zweiten Kegelrads 64 wird ein Sonnenrad 49 eines Planetengetriebes 54 in Drehung versetzt, welches seinerseits in Eingriff mit drei Planetenrädern 55 steht, die ihrerseits auf einem Hohlrad 49 ablaufen. Durch die Drehung der Motorwelle 20 werden sowohl die Planetenräder 55 um ihre jeweiligen Planetenradachsen 56 als auch um eine Sonnenradachse 50 gedreht, so dass ein in eine Aufnahme 70 des Planetenrads 55 gestecktes Werkzeug 29 eine Drehbewegung auf einem Kegel durchführt. Die Sonnenradachse 50 steht senkrecht zur Motorendrehachse 5. Die Getriebewellen 77 des Kegelradgetriebes 65 stehen im Wesentlichen senkrecht aufeinander. Dabei liegt die Motordrehachse 5 im Wesentlichen koplanar in einer Ebene mit der Sonnenradachse 50. Der durch die Planetenradachse 56 und die Sonnenradachse 50 definierte Winkel W1 beträgt in etwa 30°.

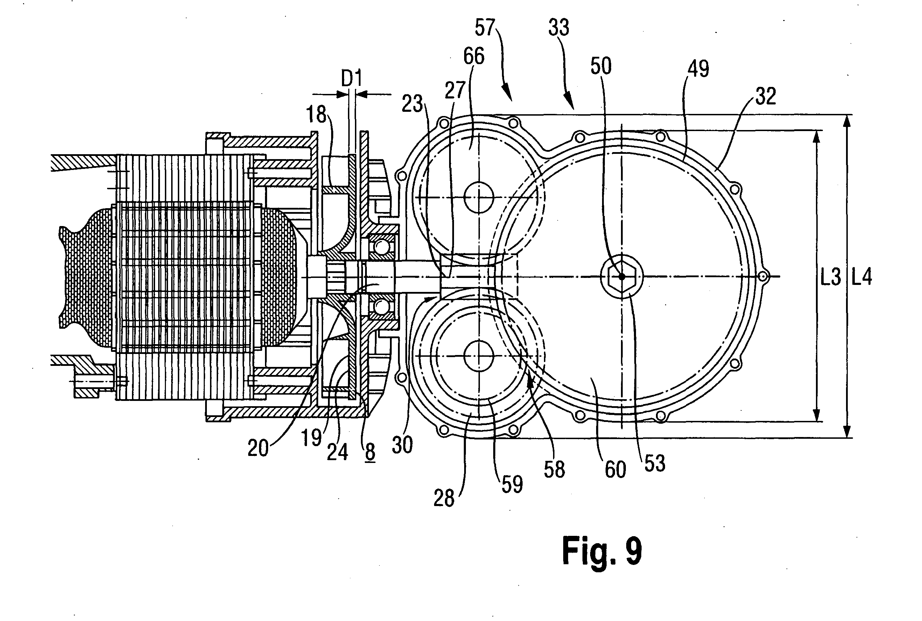

Fig. 9 zeigt eine Elektromotor-Getriebestufen-Anordnung 31 des erfindungsgemäßen Küchengeräts 1 in einem Längsschnitt mit einer waagerechten Schnittebene und zeigt eine Getriebestufe 33, die ein Schneckengetriebe 30 und ein Stirnradgetriebe 58 aufweist. Auf der Motorwelle 9 ist eine Getriebeschnecke 27 drehfest befestigt, welche mit einem Schneckenrad 28 in Eingriff gelangt, das in drehfester Verbindung mit einem ersten Stirnrad 59 steht. Gegenüberliegend zu dem Schneckenrad in Bezug auf die Getriebeschnecke 27 ist ein Gegenrad 66 angeordnet, welches in Eingriff mit der Getriebeschnecke 27 steht und Gegenkräfte aufnimmt. Das erste Stirnrad 59 steht in Eingriff mit einem zweiten Stirnrad 60, welches über eine Sonnenradwelle 53 mit dem Sonnenrad 49 in drehfester Verbindung steht. Während das Schneckengetriebe ein Übersetzungsverhältnis von im Wesentlichen 1:1 aufweist, wird mit dem Stirnradgetriebe 58 eine Untersetzung von 4:1 erzielt. Die Länge L3 beträgt zwischen 80 und 100 mm. Die Länge L4 beträgt zwischen 90 und 120 mm. Mit Hilfe des Kühlrads 6 kann an der Getriebeschnecke 27 erzeugte Wärme durch Wärmeleitung geführt werden, indem die erzeugte Wärme im Inneren der Motorwelle 20 an das Kühlrad 24 abgegeben wird. Das Kühlrad weist einen breiten Sitz und eine große Dicke D1 auf, um Wärmeübergangswiderstände und Wärmeleitungswiderstände möglichst gering zu halten. Hierdurch wird eine zusätzliche Kühlung des Schneckengetriebes 30 überflüssig. Das Kühlrad 24 weist darüber hinaus Ventilatorflügel 18 auf, die die Kühlung unterstützen.

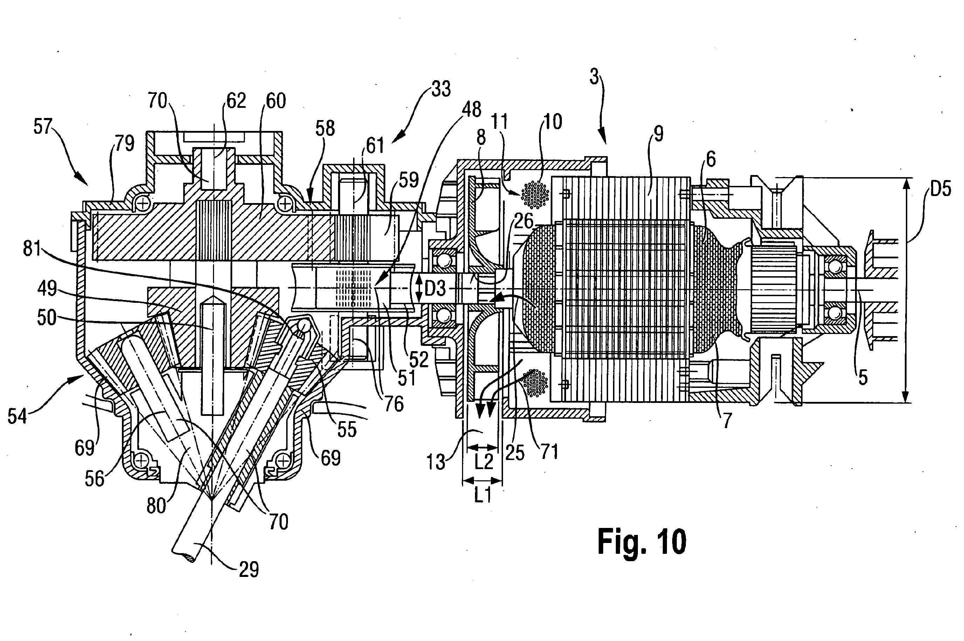

Fig. 10 zeigt eine Elektromotor-Getriebestufen-Anordnung 31 des erfindungsgemäßen Küchengeräts mit einem Stirnradgetriebe 58 und einem Stirnschraubradgetriebe 48 als Getriebestufe 33, wobei das Stirnschraubradgetriebe 48 ein erstes Stirnschraubrad 51, welches auf der Motorwelle 20 befestigt ist, und ein zweites Stirnschraubrad 52 aufweist, welches drehfest mit einem ersten Stirnrad 59 verbunden ist. Das erste Stirnrad 59 steht in Eingriff mit einem zweiten Stirnrad 60, welches auf einer zweiten Stirnradwelle 62 befestigt ist und mit dem Sonnenrad 49 drehfest verbunden ist. Die zweite Stirnradwelle 62 ist im Wesentlichen parallel zu einer ersten Stirnradwelle 61 des ersten Stirnrads 59. Die zweite Stirnradwelle 62 weist eine Aufnahme 70 für ein Werkzeug 29 auf. Um dieses Werkzeug in die Aufnahme 70 einzuführen, muss ein Gehäusedeckel 79 angehoben werden. Das Stirnradgetriebe 58 und das Stirnschraubradgetriebe 48 bilden eine drehungsübertragende Verbindung für das Planetengetriebe 54, welches das Sonnenrad 49, drei Planetenräder 55 und ein Hohlrad 69 aufweist. Das Sonnenrad 49, die Planetenräder 55 und das Hohlrad 69 sind kegelförmig, so dass bei einer Drehung der Motorwelle 20 ein Werkzeug 29, welches in eine Aufnahme 70 der Planetenräder 55 eingesetzt ist, um eine Planetenradachse 56 dreht, die ihrerseits auf einem Kegel um eine Sonnenradachse 50 rotiert. Aufgrund der Kegelform des Sonnenrads 49 der Planetenräder 55 und des Hohlrads 69 führt das Werkzeug 29 eine Taumelbewegung durch, wobei die Taumelbewegung auf einem Kegel mit einem Öffnungswinkel von ungefähr 60 ° verläuft. Das Werkzeug 29 kann in die Aufnahme 70 eines Planetenrads 55 gesteckt und mit Hilfe einer Werkzeugarretierung 81 arretiert werden. Das Stirnschraubradgetriebe 48 weist im Wesentlichen senkrecht zueinander stehende Getriebewellen 76 auf. Der Elektromotor 3 weist einen Rotor 6 auf, der Rotorwicklungen 7 trägt, die von der durch das Lüfterrad 8 erzeugten Kühlluft 71 gekühlt werden. Ein Stator 9 des Elektromotors 3 weist Statorwicklungen 10 auf, die dem Lüfterrad 8 frei, d. h. ohne ein dazwischen befindliches Hindernis, gegenüberliegen. Hierdurch kann die Kühlluft 71 direkt mit einem Wicklungsende 11 der Statorwicklung 10 in Berührung gelangen. Das Motorgehäuse 4 weist Austrittsöffnungen 13 für die Kühlluft 71 auf, welche eine Länge L1 aufweisen, die in etwa der axialen Länge L2 des Lüfterrads 8 entspricht. Die Dicke des Lüfterrads 8 beträgt 30 % des Durchmessers D3 der Motorwelle 20 und bewirkt eine gute Wärmeabfuhr von der Motorwelle 20 weg und hin zu radial außen liegenden Bereichen des Lüfterrades 8. Der Durchmesser D5 des Kühlrads 64 entspricht im Wesentlichen dem Durchmesser der Statorwicklungen 10 in einer Ebene senkrecht zur Motordrehachse 5. Mit Hilfe des Lüfterrads 8 wird insbesondere Kühlluft von innen aus dem Motorgehäuse nach außen gefördert.

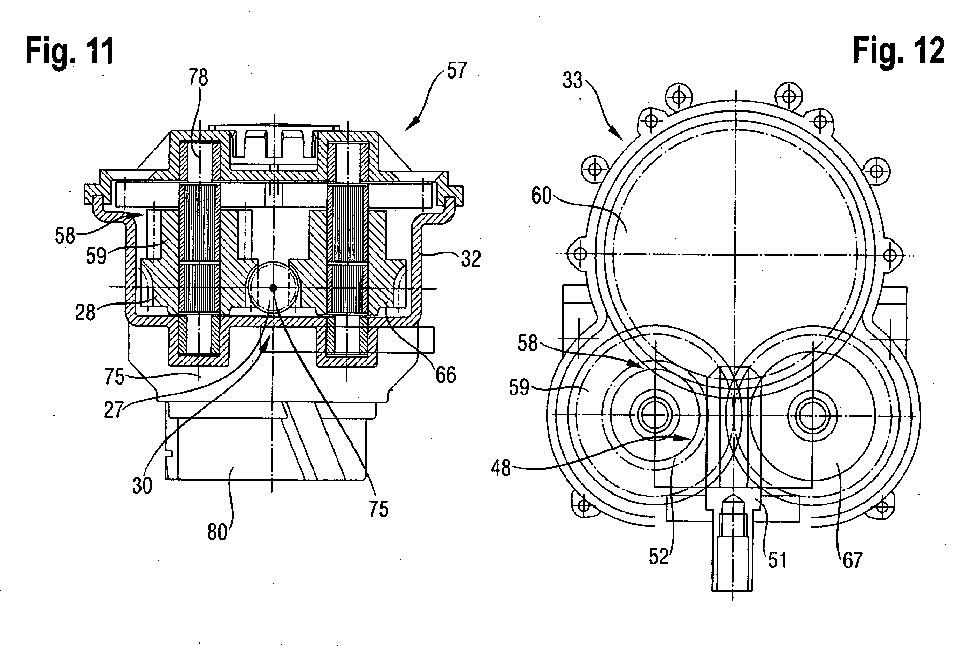

Fig. 11 zeigt eine drehungsübertragende Verbindung 57 mit einem Stirnradgetriebe 58 und einem Schneckengetriebe 30 im Querschnitt entlang einer vertikalen Schnittebene senkrecht zur Motordrehachse 5. Eine Getriebeschnecke 27 greift in ein Schneckenrad 28, welches über eine Getriebewelle 75 mit einem ersten Stirnrad 59 drehfest verbunden ist, welches seinerseits in ein zweites Stirnrad 60 (nicht gezeigt) eingreift. Ein Schneckengegenrad 66 nimmt Gegenkräfte auf, so dass die Getriebeschnecke 27 nicht nach rechts ausbrechen kann. An einem Gerätekopf 80 kann ein Rührbesen 74 (siehe Fig. 1) gesetzt werden.
Fig. 12 zeigt eine weitere Ausführungsform der Getriebestufe 33 mit einem Stirnradgetriebe 58 und einem Stirnschraubradgetriebe 48, wobei ein erstes Stirnschraubrad 28 mit einem zweiten Stirnschraubrad 52 in Eingriff gelangt, welches drehfest verbunden mit einem ersten Stirnrad 59 ist, dass in Eingriff mit einem zweiten Stirnrad 60 steht. In Bezug auf das erste Stirnschraubrad 51 gegenüberliegend zu dem zweiten Stirnschraubrad 52 ist ein Stirnschraubgegenrad 67 angeordnet, um Gegenkräfte aufnehmen zu können.

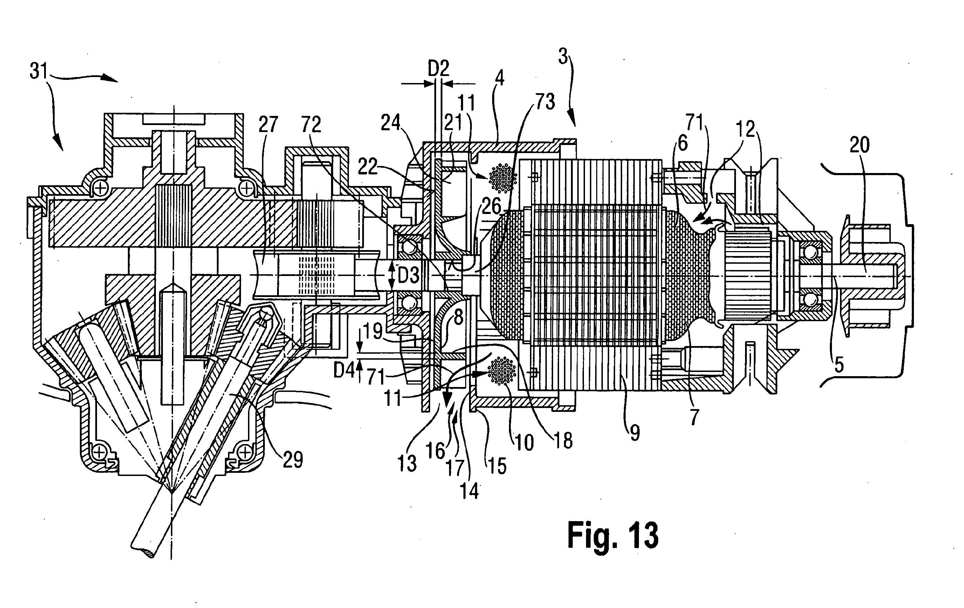

Fig. 13 zeigt eine weitere Ausführungsform der Elektromotor-Getriebestufen-Anordnung 31 im Längsschnitt mit einer vertikalen Schnittebene, wobei auf der Motorwelle 20 ein Kühlrad 24 befestigt ist, welches mit einer gut wärmeleitenden Kontaktfläche 26 mit der Motorwelle 20 verbunden ist, um einen Wärmeübergangswiderstand 72 möglichst klein zu gestalten. Wärme, die an der Getriebeschnecke 27 oder in den Rotorwicklungen 7 des Rotors 6 gebildet wird, wird in der Motorwelle 20, welche einen möglichst geringen Wärmeleitungswiderstand 73 aufweist, über die Kontaktflächen 26 an das Kühlrad 24 geleitet, welches die Wärme aufgrund seiner großen Wandstärke D2 gut aufnehmen und in radial außen liegende Bereiche des Kühlrads 24 effizient befördern kann. Das Kühlrad 24 weist darüber hinaus Ventilatorflügel 18 auf, welche bei der Drehung der Motorwelle 20 einen Kühlluftstrom 71 generieren. Der Kühlluftstrom 71 kühlt einerseits das Kühlrad 24 und hilft somit die über Wärmeleitung transportierte Wärme abzuführen. Weiterhin erzeugt das Kühlrad 24 Kühlluft 71, die direkt an einem Wicklungsende 11 einer Statorwicklung 10 des Stators 9 vorbeistreicht und somit auch den Stator 9 kühlt. Das Motorgehäuse 4 weist Eintrittsöffnungen 12 für Kühlluft 71 wie auch Austrittsöffnungen 13 auf. Die Austrittsöffnungen weisen einen ersten 14 und einen zweiten 15 Rand auf, die jeweils auskragend nach innen bzw. außen gestaltet sind, wodurch ein erster Strömungskanal 16 und ein zweiter Strömungskanal 17 erzeugt wird, welche eine Beschleunigung der Kühlluft 71 unterstützen und somit die Kühlung des Elektromotors 3 positiv beeinflussen. Das Kühlrad 24 ist als Lüfterrad 8 ausgestaltet, indem die Ventilatorflügel 18 auf einer Trägerscheibe 19 aufgebracht sind. Das Lüfterrad 8 ist durch Spritzguss hergestellt. Die Wandstärke D4 der Ventilatorflügel 18 beträgt in etwa 20 % des Durchmessers D3 der Motorwelle 20. Die Kontaktfläche 26 entspricht in etwa der Querschnittsfläche der Motorwelle 20. Durch eine derartige Dimensionierung des Lüfterrads 8 wird eine gute Wärmeabfuhr der in der Getriebeschnecke 27 bzw. in den Rotorwicklungen 7 erzeugten Wärme bewirkt. Die Wärme wird über das Lüfterrad 8 abgeführt, so dass insgesamt eine besonders zügige und effiziente Wärmeabfuhr selbst bei starker Belastung des Küchengeräts 1 erzielt wird.

Im Folgenden werden verschiedene weitere Aspekte, die mit der Erfindung in einem Zusammenhang stehen, beschrieben. Die einzelnen Aspekte können jeweils einzeln angewandt, d.h. unabhängig voneinander, oder beliebig miteinander kombiniert werden:

Ein besonders vorteilhafter Elektromotor 3 für ein elektromotorisches Küchengerät 1, insbesondere für eine elektromotorische Solo- oder Universalküchenmaschine, umfassend ein Motorgehäuse 4, in dem ein entlang einer Motordrehachse 5 drehbeweglicher Rotor 6 mit einem damit drehfest verbundenen Lüfterrad 8 angeordnet ist sowie ein Stator 9 mit einer Statorwicklung 10 , wobei die Statorwicklung 10 ein Wicklungsende 11 aufweist, weiches sich parallel zu einer Richtung der Motordrehachse 5 zum Lüfterrad 8 hin erstreckt, ist dadurch gekennzeichnet, dass das Wicklungsende 11 und das Lüfterrad 8 sich frei gegenüberliegen. In einer Ausgestaltung ist der Elektromotor 3 ein Wechselstrommotor. In einer weiteren Ausgestaltung ist der Elektromotor 3 ein Kondensatormotor. In einer noch weiteren Ausgestaltung ist der Elektromotor 3 ein Spaltpolmotor. In einer Ausgestaltung weist das Motorgehäuse 4 Eintrittsöffnungen 12 und Austrittsöffnungen 13 für von dem Lüfterrad 8 geförderte Kühlluft 71 auf, und die Länge L1 der Austrittsöffnungen 13 entlang der Richtung der Motordrehachse 5 entspricht im Wesentlichen der axialen Länge L2 des Lüfterrads 8. In einer weiteren Ausgestaltung weist das Motorgehäuse 4 Austrittsöffnungen 13 für von dem Lüfterrad 8 geförderte Kühlluft 71 auf, die einen nach innen in das Motorgehäuse 4 auskragenden ersten Rand 14 aufweisen, der als erster Strömungskanal 16 zur Beschleunigung der Kühlluft 71 dient. Weiterhin kann das Motorgehäuse 4 Austrittsöffnungen 13 für von dem Lüfterrad 8 geförderte Kühlluft 71 aufweisen, die einen nach außen auskragenden zweiten Rand 15 aufweisen, der als zweiter Strömungskanal 17 zur Beschleunigung der Kühlluft 71 dient. In einer Weiterbildung umfasst das Lüfterrad 8 Ventilatorflügel 18 und weist eine senkrecht zur Motordrehachse 5 angeordnete Trägerscheibe 19 mit einer ersten 21 und einer zweiten 22 Scheibenfläche auf, wobei die Ventilatorflügel 18 an der Trägerscheibe 19 befestigt sind. In einer weiteren Weiterbildung sind die Ventilatorflügel 18 gemeinsam auf der ersten Scheibenfläche 21 angeordnet, insbesondere gut wärmeleitend angeordnet, die insbesondere zur Statorwicklung 10 hin weist. In einer speziellen Ausführungsform liegt die maximale nominale Drehfrequenz des Elektromotors 3 in einem Bereich von 8000 bis 20000 Umdrehungen pro Minute, insbesondere in einem Bereich von 10000 und 15000 Umdrehungen pro Minute. Die maximale aufnehmbare elektrischen Nennleistung des Elektromotors 3 kann in einem Bereich von 200 W bis 1200 W, insbesondere in einem Bereich von 600 W bis 900 W, liegen.

Ein besonders vorteilhaftes elektromotorisches Küchengerät 1, insbesondere elektromotorische Solo- oder Universalküchenmaschine, umfasst den erfindungsgemäßen Elektromotor 3.

Ein besonders vorteilhaftes elektromotorisches Küchengerät 1, insbesondere elektromotorische Solo- oder Universalküchenmaschine, mit einem Elektromotor 3, der einen Stator 9 und einen darin auf einer Motorwelle 20 drehbeweglichen Rotor 6 aufweist, wobei der Rotor 6 Rotorwicklungen 7 umfasst und die Motorwelle 20 ein Getriebeelement 23, insbesondere eine Getriebeschnecke 27 oder ein erstes Stirnschraubrad 51, aufnimmt, ist dadurch gekennzeichnet, dass ein mit der Motorwelle 20 drehfest verbundenes metallisches Kühlrad 24 zum Kühlen der Rotorwicklungen 7 und/oder zum Kühlen des Getriebeelements 23 vorgesehen ist. Vorteilhafterweise sind das Kühlrad 24 und der Rotor 6 über die Motorwelle 20 derart wärmeleitend verbunden, dass im Betrieb bei nominaler Maximalleistung des Elektromotors 3 mindestens 20 %, insbesondere mindestens 30%, vorzugsweise mindestens 40%, der von den Rotorwicklungen 7 erzeugten Wärme über Wärmeleitung an das Kühlrad 24 abgeleitet wird. Insbesondere sind das Kühlrad 24 und das Getriebeelement 23 derart wärmeleitend verbunden, dass im Betrieb bei nominaler Maximalleistung des Elektromotors 3 mindestens 60 %, insbesondere mindestens 75 %, vorzugsweise mindestens 90%, der an dem Getriebeelement 23 eingeführten Wärmeleistung über Wärmeleitung an das Kühlrad 24 abgeführt wird. In einer Ausgestaltung liegt eine Wandstärke D2 der Kühlrads 24 mindestens 20 %, insbesondere mindestens 25 %, vorzugsweise mindestens 30%, des Durchmessers D3 der Motorwelle 20 beträgt und insbesondere in einem Bereich von 1,5 mm bis 5 mm. In einer Weiterbildung ist die Summe der Wärmeübergangswiderstände 72 entlang der Wärmeleitungsstrecke 25 Rotorwicklung-Rotor-Motorwelle-Kühlrad 24 kleiner als die Summe der Wärmeleitungswiderstände 73 zwischen den Rotorwicklungen 7 und dem Kühlrad 24, insbesondere kleiner als 50%, vorzugsweise kleiner als 30%, besonders bevorzugt kleiner als 10 %. Das Kühlrad 24 und die Motorwelle 20 können an einer Kontaktfläche 26 verbunden sein, die mindestens 40 %, insbesondere mindestens 50%, vorzugsweise mindestens 60%, der Außenumfangfläche eines Hohlzylinders mit einem Durchmesser gleich dem Durchmesser D3 der Motorwelle 20 und einer Länge gleich dem Durchmesser D3 der Motorwelle 20 beträgt. Vorteilhafterweise ist das Kühlrad 24 entlang der Motorwelle 20 zwischen den Rotorwicklungen 7 und dem Getriebeelement 23 angeordnet. Das Getriebeelement 23 kann eine Getriebeschnecke 27 sein. In einer Ausgestaltung kann das Kühlrad 24 als Lüfterrad 8 ausgestaltet sein und kann insbesondere Ventilatorflügel 18 umfassen, deren Wandstärken D4 vorzugsweise mindestens 15 %, besonders bevorzugt mindestens 20%, des Durchmessers D3 der Motorwelle 20 betragen. Vorteilhafterweise weist das Kühlrad 24 eine senkrecht zur Motordrehachse 5 angeordnete Trägerscheibe 19 mit einer ersten 21 und einer zweiten 22 Scheibenfläche auf, wobei die Ventilatorflügel 18 an der Trägerscheibe 19 befestigt sind und insbesondere die Dicke D1 der Trägerscheibe 19 mindestens 20%, vorzugsweise mindestens 30%, des Durchmessers D3 der Motorwelle 20 beträgt. Vorteilhafterweise entspricht der Durchmesser D5 des Kühlrads 24 im Wesentlichen dem des Stators 9. In einer speziellen Ausgestaltung besteht das Kühlrad 24 aus Aluminium oder einer Aluminium-Zink Legierung. Das Kühlrad 24 kann durch Gießen oder Schmieden hergestellt sein. In einer Ausgestaltung kann ein Werkzeug 29, insbesondere ein Pürier-, Misch-, Häcksel-, Knet- und/oder Schneidwerk, ein Schlag- bzw. Rührbesen 74, ein Getränkemixer, ein Durchlaufschnitzler, eine Getreidemühle, eine Zitrus- bzw. Fruchtpresse und/oder ein Fleischwolf, in das Küchengerät 1 einsetzbar sein.

Eine besonders vorteilhafte Anordnung eines Schneckengetriebes 30 umfasst ein Schneckenrad 28, eine Getriebeschnecke 27, eine Motorwelle 20 und ein Kühlrad 24, wobei das Schneckenrad 28 mit der an der Motorwelle 20 drehfest verbundenen Getriebeschnecke 27 in Eingriff gelangt und das Kühlrad 24 an und mit der Motorwelle 20 drehfest verbunden ist, und ist dadurch gekennzeichnet, dass das Kühlrad 24 metallisch ist und dass im Betrieb bei nominaler Maximalleistung mindestens 60 %, insbesondere mindestens 75 %, vorzugsweise mindestens 90%, der an dem Schneckengetriebe 30 erzeugten Wärmeleistung an das Kühlrad 24 über Wärmeleitung abgeführt wird. Das Kühlrad 24 kann ein Lüfterrad 8 sein.

Ein besonders vorteilhaftes elektromotorisches Küchengerät 1, insbesondere elektromotorische Solo- oder Universalküchenmaschine, umfassend eine einsetzbare Elektromotor-Getriebestufen-Anordnung 31, die einen ein Motorgehäuse 4 aufweisenden Elektromotor 3 und eine damit befestigte, ein Getriebegehäuse 32 aufweisende Getriebestufe 33 aufweist, ist dadurch gekennzeichnet, dass die Anordnung 31 einen aufsetzbaren Verstärkungsrahmen 37 aufweist, der um das Motorgehäuse 4 und das Getriebegehäuse 32 herum verläuft. In einer Ausgestaltung stellt der Verstärkungsrahmen 37 eine im Wesentlichen torsionssteife Verbindung entlang der Verbindungslinie 38 zwischen dem Elektromotor 3 und der Getriebestufe 33 her, wobei die torsionssteife Verbindung insbesondere Drehmomente in einem Bereich von 3 Nm bis 100 Nm, vorzugsweise in einem Bereich von 5 Nm bis 50 Nm, besonders bevorzugt ein einem Bereich von 10 Nm bis 20 Nm, aufnehmen kann. Der Verstärkungsrahmen 37 kann aus einem Metall, insbesondere durch Stanzen und Pressen oder durch Spritzguss, hergestellt sein. Der Verstärkungsrahmen 37 kann mit Hilfe von weniger als zehn Schrauben 39, insbesondere mit weniger als sechs Schrauben, vorzugsweise mit nur einer Schraube, an dem Getriebegehäuse 32 und/oder an dem Motorgehäuse 4 verschraubt sein. Vorteilhafterweise umfasst das Getriebegehäuse 32 und das Motorgehäuse 4 bzw. der Verstärkungsrahmen 37 Verbindungselemente D1, insbesondere Verbindungsvorsprünge 41, vorzugsweise eine umlaufende Feder, und Verbindungsgegenelemente 42, insbesondere Verbindungsaufnahmen 43, vorzugsweise eine umlaufende Nut, mit denen eine gewindefreie Befestigung des Verstärkungsrahmen 37 an dem Getriebegehäuse 32 bzw. an dem Motorgehäuse 4 bewirkt wird. Der Verstärkungsrahmen 37 kann ein U-förmiges oder L-förmiges Profil 44 aufweisen. Vorteilhafterweise kann ein Werkzeug 29, insbesondere ein Pürier-, Misch-, Häcksel-, Knet- und/oder Schneidwerk, ein Schlag- bzw. Rührbesen 74, ein Getränkemixer, ein Durchlaufschnitzler, eine Getreidemühle, eine Zitrus- bzw. Fruchtpresse und/oder ein Fleischwolf, mit dem Küchengerät 1 verbunden werden. Das Motorgehäuse 4 und/oder das Getriebegehäuse 32 kann auch aus Kunststoff, insbesondere aus glasfaserverstärktem Kunststoff, hergestellt sein. Das Getriebegehäuse 32 und das Motorgehäuse 4 kann mit Hilfe eines Schraubflansches 45, insbesondere mit Hilfe eines Bajonettverschlusses 34, miteinander verbunden sein.

Ein besonders vorteilhaftes Verfahren zum Herstellen eines Küchengeräts 1, insbesondere eines erfindungsgemäßen Küchengeräts 1, welches ein Gerätegehäuse, einen ein Motorgehäuse 4 aufweisenden Elektromotor 3 und eine ein Getriebegehäuse 32 aufweisende Getriebestufe 33 aufweist, sieht vor, dass zur Vormontage das Motorgehäuse 4 mit dem Getriebegehäuse 32 unter Ausbildung einer Elektromotor-Getriebestufen-Anordnung 31 derart verbunden wird, dass eine Motorwelle 20 des Elektromotors 3 mit einer Getriebewelle der Getriebestufe 33 drehfest verkoppelt wird, und um das Getriebegehäuse 32 und das Motorgehäuse 4 ein Verstärkungsrahmen 37 herumgelegt wird, so dass das Getriebegehäuse 32 torsionssteif mit dem Motorgehäuse 4 verbunden ist; und dass anschließend die vormontierte Elektromotor-Getriebestufen-Anordnung 31 in das Gerätegehäuse 2 eingebaut wird. Der Verstärkungsrahmen 37 kann mit weniger als zehn Schrauben 39, insbesondere weniger als sechs Schrauben, vorzugsweise mit nur einer Schraube, an dem Motorgehäuse 4 und/oder Getriebegehäuse 32 befestigt sein. Vorteilhafterweise wird der Verstärkungsrahmen 37 mit dem Motorgehäuse 4 und/oder mit dem Getriebegehäuse 32 verklipst. Vorteilhafterweise wird die Elektromotor-Getriebestufen-Anordnung 31 vor dem Einbau in das Gerätegehäuse 2 getestet bzw. spezifiziert.

Ein besonders vorteilhaftes elektromotorisches Küchengerät 1, insbesondere elektromotorische Solo- oder Universalküchenmaschine, mit einem Elektromotor 3 und einer Getriebestufe 33, wobei der Elektromotor 3 ein Motorgehäuse 4 und die Getriebestufe 33 ein Getriebegehäuse 32 aufweist, ist dadurch gekennzeichnet, dass das Motorgehäuse 4 und das Getriebegehäuse 32 mit Hilfe eines Bajonettverschlusses 34 miteinander verbunden sind. Das Motorgehäuse 4 kann aus glasfaserverstärktem Kunststoff oder Spritzguss sein. Das Getriebegehäuse 32 kann auch aus glasfaserverstärktem Kunststoff oder Spritzguss sein. Der Bajonettverschluss 34 weist insbesondere einen Verschlusswinkel 46 von weniger als 180 °, insbesondere von weniger als 90°, vorzugsweise von weniger als 45 °, auf. In einer Ausgestaltung weist der Elektromotor 3 eine einzige Drehrichtung 47 auf, die in Schließrichtung des Bajonettverschlusses 34 wirkt und ein Selbstfestziehen des Bajonettverschlusses 34 im Betrieb bewirkt. Vorteilhafterweise wird eine drehfeste Verbindung einer Motorwelle 20 des Elektromotors 3 mit einer Getriebewelle 75 der Getriebestufe 33 mit Hilfe eines Schneckengetriebes 30 hergestellt. Das Schneckengetriebe 30 kann eine motorseitige Getriebeschnecke 27 und mindestens ein getriebeseitiges Schneckenrad 28, vorzugsweise zwei zur Getriebeschnecke 27 gegenüberliegende, getriebeseitige Schneckenräder, umfassen. Vorteilhafterweise werden das Motorgehäuse 4 und das Getriebegehäuse 32 zusätzlich durch einen Verstärkungsrahmen 37 miteinander fixiert. In einer Ausgestaltung weist der Bajonettverschluss 34 eine Verschlussdrehachse auf, die im Wesentlichen mit einer Motordrehachse 5 zusammenfällt. Vorteilhafterweise weist das Küchengerät 1 ein Gerätegehäuse 2 auf, in welches der mit der Getriebestufe 33 verbundene Elektromotor 3 einsetzbar ist.

Ein besonders vorteilhafter Elektromotor weist ein erstes Bajonettverschlussteil 35 für das erfindungsgemäße Küchengerät 1 auf.

Eine besonders vorteilhafte Getriebestufe 33 weist ein zweites Bajonettverschlussteil 36 für ein Küchengerät 1 auf.

Ein besonders vorteilhaftes Verfahren zum Montieren eines elektromotorischen Küchengeräts 1, insbesondere des erfindungsgemäßen Küchengeräts 1, mit einem Elektromotor 3 und einer Getriebestufe 33, wobei der Elektromotor 3 ein Motorgehäuse 4 und die Getriebestufe 33 ein Getriebegehäuse 32 aufweist, ist gekennzeichnet durch folgende Verfahrensschritte: Vormontieren des Elektromotors 3 in dem Motorgehäuse 4, Vormontieren der Getriebestufe 33 in dem Getriebegehäuse 32, Verbinden des Motorgehäuses 4 und des Getriebegehäuses 32 mit Hilfe eines Bajonettverschlusses 34, derart, dass eine Motorwelle 20 des Elektromotors 3 mit einer Getriebewelle 75 drehfest verbunden werden. Vorteilhafterweise erfolgt die Dreh-Streckbewegung des Verschließens des Bajonettverschlusses 34 im Wesentlichen um die Motorwelle 20 herum.

Ein besonders vorteilhaftes elektromotorisches Küchengerät 1, insbesondere elektromotorische Solo- oder Universalküchenmaschine, umfassend ein Planetengetriebe 54, welches mindestens ein Planetenrad 55 mit einer Planetenradachse 56 und ein Sonnenrad 49 mit einer Sonnenradachse 50, und einen Elektromotor 3 mit einer Motorwelle 20, die sich entlang einer Motordrehachse 5 erstreckt, aufweist, wobei die Motorwelle 20 und das Planetengetriebe 54 mit einer drehungsübertragenden Verbindung 57 miteinander gekoppelt sind, ist dadurch gekennzeichnet, dass die drehungsübertragende Verbindung 57 ein Stirnradgetriebe 58 mit einem ersten 59 und ein zweiten 60 Stirnrad und/oder ein Kegelradgetriebe 65 mit einem ersten 63 und einem zweiten 64 Kegelrad umfasst. In einer Ausgestaltung weist das Stirnradgetriebe 58 bzw. das Kegelradgetriebe 65 ein Übersetzungsverhältnis in einem Bereich von 10 bis 40, insbesondere in einem Bereich von 20 bis 30, auf. In einer Weiterbildung umfasst die drehungsübertragende Verbindung 57 ein Schneckengetriebe 30 mit einer Getriebeschnecke 27 und einem Schneckenrad 28 oder ein Stirnschraubradgetriebe 48 mit einem ersten 51 und einem zweiten 52 Stirnschraubrad, wobei das Schneckengetriebe 30 bzw. das Stirnschraubradgetriebe 48 ein Übersetzungsverhältnis in einem Bereich von 0,5 bis 4, insbesondere in einem Bereich von 1 bis 2, aufweist. Die Getriebeschnecke 27 bzw. das erste Stirnschraubrad 51 kann auf der Motorwelle 20 sitzen. Das Sonnenrad 49 kann eine Sonnenradwelle 53 aufweisen, auf der ein zweites Kegelrad sitzt. In einer Ausgestaltung stehen die jeweiligen Getriebewellen 75 des Schneckengetriebes 30, die jeweiligen Getriebewellen 76 des Stirnschraubradgetriebes 48 bzw. die jeweiligen Getriebewellen 77 des Kegelradgetriebes 65 im Wesentlichen senkrecht aufeinander bzw. die jeweiligen Getriebewellen 78 des Stirnradgetriebes 58 im Wesentlichen parallel zueinander. Die Sonnenradachse 50 kann im Wesentlichen senkrecht auf der Motordrehachse 5 stehen und mit dieser koplanar sein. In einer Weiterbildung weist zur Aufnahme von Gegenkräften das Schneckengetriebe 30 ein Schneckengegenrad 66, das Stirnschraubradgetriebe 48 ein Stirnschraubgegenrad 67, bzw. das Kegelradgetriebe 65 ein Kegelgegenrad 68 auf, welches in Bezug auf die Getriebeschnecke 27, das erste Stirnschraubrad 51, bzw. das erste Kegelrad 63 jeweils dem Schneckenrad 28, dem zweiten Stirnschraubrad 52 bzw. dem zweiten Kegelrad 64 gegenüberliegt und mit der Getriebeschnecke 27, dem ersten Stirnschraubrad 51 bzw. dem ersten Kegelrad 63 in Eingriff gelangt. Das Planetengetriebe 54 kann ein zu dem Sonnenrad 49 koaxial angeordnetes Hohlrad 69 aufweisen. Das Hohlrad 69 kann stationär sein und mit einem Gerätegehäuse 2 des Küchengeräts 1 drehfest verbunden sein. Das Hohlrad 69 kann kegelförmig sein. Die Planetenräder 55 können kegelförmig sein. In einer Ausgestaltung schneiden sich die Planetenradachse 56 und die Sonnenradachse 50 unter einem Winkel in einem Bereich von 30° bis 80°, insbesondere in einem Bereich von 20° bis 35°, vorzugsweise in einem Bereich von 25° bis 30°, schneiden. Vorteilhafterweise sind mindestens zwei, insbesondere mindestens drei, Planetenräder 55 vorgesehen. Vorteilhafterweise weist das Planetenrad 55 eine Planetenradachse 56 auf und das Übersetzungsverhältnis zwischen einer Drehung um die Sonnenradachse 50 und einer Drehung um die Planetenradachse 56 liegt in einem Bereich von 1:1 bis 1:10, insbesondere in einem Bereich von 1:2 bis 1:5. Der Elektromotor 3 kann eine maximale nominelle Umlauffrequenz in einem Bereich von 8000 Umdrehungen pro Minute bis 20000 Umdrehungen pro Minute, insbesondere in einem Bereich von 10000 Umdrehungen pro Minute bis 15000 Umdrehungen pro Minute, aufweisen. In einer besonderen Ausgestaltung weist das mindestens eine Planetenrad 55 eine Aufnahme 70 für ein Werkzeug 29, insbesondere ein Pürier-, Misch-, Häcksel-, Knet- und/oder Schneidwerk und/oder einen Schlag- bzw. Rührbesen 74, auf.

Die Erfindung betrifft ein elektromotorisches Küchengerät 1, eine insbesondere elektromotorische Solo- oder Universalküchenmaschine, umfassend ein Planetengetriebe 54, welches mindestens ein Planetenrad 55 mit einer Planetenradachse 56 und einem Sonnenrad 49 mit einer Sonnenradachse 50 aufweist, und einen Elektromotor 3 mit einer Motorwelle 20, die sich entlang einer Motordrehachse 5 erstreckt, wobei die Motorwelle 20 und das Planetengetriebe 54 mit einer drehungsübertragenden Verbindung 57 miteinander gekoppelt sind, wobei die drehungsübertragende Verbindung 57 ein Stirnradgetriebe 58 mit einem ersten 59 und einem zweiten 60 Stirnrad und/oder ein Kegelradgetriebe 65 mit einem ersten 63 und einem zweiten 64 Kegelrad umfasst. Die Erfindung zeichnet sich dadurch aus, dass ein vergleichsweise kleiner Elektromotor mit hoher elektrischer Leistung in einem kompakten Aufbau eines Küchengeräts 1 integriert werden kann, ohne dass eine übermäßige thermische Belastung in einem Getriebeelement aufgrund von Getriebereibung entsteht, so dass ein zuverlässiger Betrieb des Küchengeräts 1 auch über einen langen, ununterbrochenen Zeitraum unter starker Belastung möglich ist.

### Bezugszeichenliste

- 1: Küchengerät
- 2: Gerätegehäuse
- 3: Elektromotor
- 4: Motorgehäuse
- 5: Motordrehachse
- 6: Rotor
- 7: Rotorwicklungen.
- 8: Lüfterrad
- 9: Stator
- 10: Statorwicklung
- 11: Wicklungsende
- 12: Eintrittsöffnungen
- 13: Austrittsöffnungen
- 14: erster Rand
- 15: zweiter Rand
- 16: erster Strömungskanal
- 17: zweiter Strömungskanal
- 18: Ventilatorflügel
- 19: Trägerscheibe
- 20: Motorwelle
- 21: erste Scheibenfläche
- 22: zweite Scheibenfläche
- 23: Getriebeelement
- 24: Kühlrad
- 25: Wärmeleitungsstrecke
- 26: Kontaktfläche
- 27: Getriebeschnecke
- 28: Schneckenrad
- 29: Werkzeug
- 30: Schneckengetriebe
- 31: Elektromotor-Getriebestufen-Anordnung
- 32: Getriebegehäuse
- 33: Getriebestufe
- 34: Bajonettverschluss
- 35: erstes Bajonettverschlussteil
- 36: zweites Bajonettverschlussteil
- 37: Verstärkungsrahmen
- 38: Verbindungslinie
- 39: Schrauben
- 40: Verbindungselemente
- 41: Verbindungsvorsprünge
- 42: Verbindungsgegenelemente
- 43: Verbindungsaufnahmen
- 44: Profil
- 45: Schraubflansch
- 46: Verschlusswinkel
- 47: Drehrichtung
- 48: Stirnschraubradgetriebe
- 49: Sonnenrad
- 50: Sonnenradachse
- 51: erstes Stirnschraubrad
- 52: zweites Stirnschraubrad
- 53: Sonnenradwelle
- 54: Planetengetriebe
- 55: Planetenrad
- 56: Planetenradachse
- 57: drehungsübertragende Verbindung
- 58: Stirnradgetriebe
- 59: erstes Stirnrad
- 60: zweites Stirnrad
- 61: erste Stirnradwelle
- 62: zweite Stirnradwelle
- 63: erstes Kegelrad
- 64: zweites Kegelrad
- 65: Kegelradgetriebe
- 66: Schneckengegenrad
- 67: Stirnschraubgegenrad
- 68: Kegelgegenrad
- 69: Hohlrad
- 70: Aufnahme
- 71: Kühlluft
- 72: Wärmeübergangswiderstand
- 73: Wärmeleitungswiderstände
- 74: Rührbesen
- 75: Getriebewellen des Schneckengetriebes 30
- 76: Getriebewellen des Stirnschraubradgetriebes 48
- 77: Getriebewellen des Kegelradgetriebes 65
- 78: Getriebewellen des Stirnradgetriebes 58
- 79: Gehäusedeckel
- 80: Gerätekopf
- 81: Werkzeugarretierung

- L1: Länge der Austrittsöffnungen 13
- L2: Länge des Lüfterrads 8
- L3, L4: Längen
- D1: Dicke der Trägerscheibe 19
- D2: Wandstärke des Kühlrads 24
- D3: Durchmesser der Motorwelle 20
- D4: Wandstärke der Ventilatorflügel 18
- D5: Durchmesser des Kühlrads 24
- W1: Winkel

## Patentansprüche

1. Elektromotorisches Küchengerät (1), insbesondere elektromotorische Solo- oder Universalküchenmaschine, umfassend ein Planetengetriebe (54), welches mindestens ein Planetenrad (55) mit einer Planetenradachse (56) und ein Sonnenrad (49) mit einer Sonnenradachse (50), wobei das Sonnenrad (49) mit dem mindestens einem Planetenrad (55) in Eingriff steht, und einen Elektromotor (3) mit einer Motorwelle (20), die sich entlang einer Motordrehachse (5) erstreckt, aufweist, wobei die Motorwelle (20) und das Planetengetriebe (54) mit einer drehungsübertragenden Verbindung (57) miteinander gekoppelt sind, **dadurch gekennzeichnet, dass** die drehungsübertragende Verbindung (57) ein Stirnradgetriebe (58) mit einem ersten (59) und einem zweiten (60) Stirnrad und/oder ein Kegelradgetriebe (65) mit einem ersten (63) und einem zweiten (64) Kegelrad umfasst, wobei das zweite Stirnrad (60) und/oder das das zweite Kegelrad (64) das Sonnenrad (49) des Planetengetriebes (54) antreibt.

2. Küchengerät (1) nach Anspruch 1, **dadurch gekennzeichnet, dass** das Stirnradgetriebe (58) bzw. das Kegelradgetriebe (65) ein Übersetzungsverhältnis in einem Bereich von 10 bis 40, insbesondere in einem Bereich von 20 bis 30, aufweist.

3. Küchengerät (1) nach einem der vorherigen Ansprüche, **dadurch gekennzeichnet, dass** die drehungsübertragende Verbindung (57) ein Schneckengetriebe (30) mit einer Getriebeschnecke (27) und einem Schneckenrad (28) oder ein Stirnschraubradgetriebe (48) mit einem ersten (51) und einem zweiten (52) Stirnschraubrad umfasst, wobei das Schneckengetriebe (30) bzw. das Stirnschraubradgetriebe (48) ein Übersetzungsverhältnis in einem Bereich von 0,5 bis 4, insbesondere in einem Bereich von 1 bis 2, aufweist.

4. Küchengerät (1) nach Anspruch 3, **dadurch gekennzeichnet, dass** die Getriebeschnecke (27) bzw. das erste Stirnschraubrad (51) auf der Motorwelle (20) sitzt.

5. Küchengerät (1) nach einem der Ansprüche, **dadurch gekennzeichnet, dass** das Sonnenrad (49) eine Sonnenradwelle (53) aufweist, auf der ein zweites Kegelrad sitzt.

6. Küchengerät (1) nach einem der vorherigen Ansprüche, **dadurch gekennzeichnet, dass** die jeweiligen Getriebewellen (75) des Schneckengetriebes (30), die jeweiligen Getriebewellen (76) des Stirnschraubradgetriebes (48) bzw. die jeweiligen Getriebewellen (77) des Kegelradgetriebes (65) im Wesentlichen senkrecht aufeinander bzw. die jeweiligen Getriebewellen (78) des Stirnradgetriebes (58) im Wesentlichen parallel zueinander stehen.

7. Küchengerät (1) nach einem der vorherigen Ansprüche, **dadurch gekennzeichnet, dass** die Sonnenradachse (50) im Wesentlichen senkrecht auf der Motordrehachse (5) steht und mit dieser koplanar ist.

8. Küchengerät (1) nach einem der vorherigen Ansprüche, **dadurch gekennzeichnet, dass** zur Aufnahme von Gegenkräften das Schneckengetriebe (30) ein Schneckengegenrad (66), das Stirnschraubradgetriebe (48) ein Stirnschraubgegenrad (67), bzw. das Kegelradgetriebe (65) ein Kegelgegenrad (68) aufweist, welches in Bezug auf die Getriebeschnecke (27), das erste Stirnschraubrad (51), bzw. das erste Kegelrad (63) jeweils dem Schneckenrad (28), dem zweiten Stirnschraubrad (52) bzw. dem zweiten Kegelrad (64) gegenüberliegt und mit der Getriebeschnecke (27), dem ersten Stirnschraubrad (51) bzw. dem ersten Kegelrad (63) in Eingriff gelangt.

9. Küchengerät (1) nach einem der vorherigen Ansprüche, **dadurch gekennzeichnet, dass** das Planetengetriebe (54) ein zu dem Sonnenrad (49) koaxial angeordnetes Hohlrad (69) aufweist.

10. Küchengerät (1) nach Anspruch 9, **dadurch gekennzeichnet, dass** das Hohlrad (69) stationär ist und mit einem Gerätegehäuse (2) des Küchengeräts (1) drehfest verbunden ist.

11. Küchengerät (1) nach Anspruch 9 oder 10, **dadurch gekennzeichnet, dass** das Hohlrad (69) kegelförmig ist.

12. Küchengerät (1) nach einem der vorherigen Ansprüche, **dadurch gekennzeichnet, dass** die Planetenräder (55) kegelförmig sind.

13. Küchengerät (1) nach Anspruch 11 oder 12, **dadurch gekennzeichnet, dass** sich die Planetenradachse (56) und die Sonnenradachse (50) unter einem Winkel in einem Bereich von 30° bis 80°, insbesondere in einem Bereich von 20° bis 35°, vorzugsweise in einem Bereich von 25° bis 30°, schneiden.

14. Küchengerät (1) nach einem der vorherigen Ansprüche, **dadurch gekennzeichnet, dass** mindestens zwei, insbesondere mindestens drei, Planetenräder (55) vorgesehen sind.

15. Küchengerät (1) nach einem der vorherigen Ansprüche, **dadurch gekennzeichnet, dass** das Planetenrad (55) eine Planetenradachse (56) aufweist und das Übersetzungsverhältnis zwischen einer Drehung um die Sonnenradachse (50) und einer Drehung um die Planetenradachse (56) in einem Bereich von 1:1 bis 1:10, insbesondere in einem Bereich von 1:2 bis 1:5, liegt.

16. Küchengerät (1) nach einem der vorherigen Ansprüche, **dadurch gekennzeichnet, dass** das der Elektromotor (3) eine maximale nominelle Umlauffrequenz in einem Bereich von 8000 Umdrehungen pro Minute bis 20000 Umdrehungen pro Minute, insbesondere in einem Bereich von 10000 Umdrehungen pro Minute bis 15000 Umdrehungen pro Minute, aufweist.

17. Küchengerät (1) nach einem der vorherigen Ansprüche, **dadurch gekennzeichnet, dass** das mindestens eine Planetenrad (55) eine Aufnahme (70) für ein Werkzeug (29), insbesondere ein Pürier-, Misch-, Häcksel-, Knet- und/oder Schneidwerk und/oder einen Schlag- bzw. Rührbesen (74), aufweist.

## Claims

1. Electric-motor-driven kitchen appliance (1), particularly electric-motor-driven solo or universal food processor, comprising a planetary transmission (54), which comprises at least one planet wheel (55) with a planet wheel axis (56) and a sun wheel (49) with a sun wheel axis (50), wherein the sun wheel (49) is in engagement with the at least one planet wheel (55), and an electric motor (3) with a motor shaft (20) extending along a motor rotational axis (5), wherein the motor shaft (20) and the planetary transmission (54) are coupled together by a rotation-transmitting connection (57), **characterised in that** the rotation-transmitting connection (57) comprises a spur gear transmission (58) with a first spur gear (59) and a second spur gear (60) and/or a bevel gear transmission (65) with a first bevel gear (63) and a second bevel gear (64), wherein the second spur gear (60) and/or the second bevel gear (64) drives or drive the sun wheel (49) of the planetary transmission (54).

2. Kitchen appliance (1) according to claim 1, **characterised in that** the spur gear transmission (48) or the bevel gear transmission (65) has a translation ratio in a range of 10 to 40, particularly in a range of 20 to 30.

3. Kitchen appliance (1) according to one of the preceding claims, **characterised in that** the rotation-transmitting connection (57) comprises a worm gear transmission (30) with a transmission worm (27) and a worm gear (28) or a helical gear transmission (48) with a first helical gear (51) and a second helical gear (52), wherein the worm gear transmission (30) or the helical gear transmission (48) has a translation ratio in a range of 0.5 to 4, particularly in a range of 1 to 2.

4. Kitchen appliance (1) according to claim 3, **characterised in that** the transmission worm (27) or the first helical gear (51) is seated on the motor shaft (20).

5. Kitchen appliance (1) according to any one of the preceding claims, **characterised in that** the sun wheel (49) has a sun wheel shaft (53) on which a second bevel gear is seated.

6. Kitchen appliance (1) according to any one of the preceding claims, **characterised in that** the respective transmission shafts (75) of the worm gear transmission (30), the respective transmission shafts (76) of the helical gear transmission (48) or the respective transmission shafts (77) of the bevel gear transmission (65) are substantially perpendicular to one another or the respective transmission shafts (78) of the spur gear transmission (58) are substantially parallel to one another.

7. Kitchen appliance (1) according to any one of the preceding claims, **characterised in that** the sun wheel axis (50) is substantially perpendicular to the motor rotational axis (5) and coplanar therewith.

8. Kitchen appliance (1) according to any one of the preceding claims, **characterised in that** for acceptance of counter-forces the worm gear transmission (30) has a worm mating gear (66), the helical gear transmission (48) has a helical mating gear (67) or the bevel gear transmission (65) has a bevel mating gear (68) which with respect to the transmission worm (37), the first helical gear (51) or the first bevel gear (63) is disposed opposite, respectively, the worm gear (28), the second helical gear (52) or the second bevel gear (64) and is disposed in engagement with the transmission worm (27), the first helical gear (51) or the first bevel gear (63), respectively.

9. Kitchen appliance (1) according to any one of the preceding claims, **characterised in that** the planetary transmission (54) has a ring gear (69) arranged coaxially with respect to the sun wheel (49).

10. Kitchen appliance (1) according to claim 9, **characterised in that** the ring gear (69) is stationary and is connected with an appliance housing (2) of the kitchen appliance (1) to be secure against relative rotation.

11. Kitchen appliance (1) according to claim 9 or 10, **characterised in that** the ring gear (69) is conical.

12. Kitchen appliance (1) according to any one of the preceding claims, **characterised in that** the planet wheels (55) are conical.

13. Kitchen appliance (1) according to claim 11 or 12, **characterised in that** the planet wheel axis (56) and the sun wheel axis (50) intersect at an angle in a range of 30° to 80°, particularly in a range of 20° to 35°, preferably in a range of 25° to 30°.

14. Kitchen appliance (1) according to any one of the preceding claims, **characterised in that** at least two, particularly at least three, planet wheels (55) are provided.

15. Kitchen appliance (1) according to any one of the preceding claims, **characterised in that** the planet wheel (55) has a planet wheel axis (56) and the translation ratio between one revolution about the sun wheel axis (50) and one revolution about the planet wheel axis (56) lies in a range of 1:1 to 1:10, particularly in a range of 1:2 to 1:5.

16. Kitchen appliance (1) according to any one of the preceding claims, **characterised in that** the electric motor (3) has a maximum rated rotational frequency in a range of 8,000 revolutions per minute to 20,000 revolutions per minute, particularly in a range of 10,000 revolutions per minute to 15,000 revolutions per minute.

17. Kitchen appliance (1) according to any one of the preceding claims, **characterised in that** the at least one planet wheel (55) has a mount (70) for a tool (29), particularly a puréeing, mixing, chopping, kneading and/or cutting mechanism and/or a beating or stirring whisk (74).

## Revendications

1. Robot ménager (1) à moteur électrique, notamment appareil ménager à moteur électrique, individuel ou universel, comprenant un engrenage planétaire (54), lequel présente au moins une roue planétaire (55) munie d'un axe (56) de roue planétaire et une roue solaire (49) munie d'un axe (50) de roue solaire, la roue solaire (49) étant en prise avec l'au moins une roue planétaire (55), et un moteur électrique (3) muni d'un arbre moteur (20) qui s'étend le long d'un axe de rotation de moteur (5), l'axe moteur (20) et l'engrenage planétaire (54) étant couplés ensemble par une liaison (57) transmettant la rotation, **caractérisé en ce que** la liaison (57) transmettant la rotation comprend un engrenage à roue dentée droite (58) muni d'une première (59) et d'une seconde (60) roues dentées droites et/ou d'un engrenage conique (65) muni d'une première (63) et d'une seconde (64) roues coniques, la seconde roue dentée droite (60) et/ou la seconde roue conique (64) entraînant la roue solaire (49) de l'engrenage planétaire (54).

2. Robot ménager (1) selon la revendication 1, **caractérisé en ce que** l'engrenage à roue dentée droite (58) resp. l'engrenage conique (65) présente un rapport de transmission situé dans une plage de 10 à 40, notamment dans une plage de 20 à 30.

3. Robot ménager (1) selon l'une quelconque des revendications précédentes,
**caractérisé en ce que** la liaison (57) transmettant la rotation comprend un engrenage à vis sans fin (30) muni d'une vis sans fin (27) et d'une roue à vis sans fin (28) ou un engrenage de chant à vis sans fin (48) muni d'une première (51) et d'une seconde (52) roues droites à dents hélicoïdes, l'engrenage à vis sans fin (30) resp. l'engrenage de chant à vis sans fin (48) présentant un rapport de transmission situé dans une plage de 0,5 à 4, notamment dans une plage de 1 à 2.

4. Robot ménager (1) selon la revendication 3, **caractérisé en ce que** la vis sans fin (27) resp. la première roue droite à dents hélicoïdes (51) repose sur l'arbre moteur (20).

5. Robot ménager (1) selon l'une quelconque des revendications précédentes,
**caractérisé en ce que** la roue solaire (49) présente un arbre (53) de roue solaire, sur lequel repose une seconde roue conique.

6. Robot ménager (1) selon l'une quelconque des revendications précédentes,
**caractérisé en ce que** les arbres d'engrenages respectifs (75) de l'engrenage à vis sans fin (30), les arbres d'engrenage respectifs (76) de l'engrenage de chant à vis sans fin (48) resp. les arbres d'engrenage respectifs (77) de l'engrenage conique (65) sont situés essentiellement perpendiculairement les uns sur les autres resp. **en ce que** les arbres d'engrenage respectifs (78) de l'engrenage à roue dentée droite (58) sont essentiellement situés parallèlement les uns aux autres.

7. Robot ménager (1) selon l'une quelconque des revendications précédentes,
**caractérisé en ce que** l'axe (50) de la roue solaire est essentiellement situé perpendiculairement sur l'axe de rotation du moteur (5) et est coplanaire à celui-ci.

8. Robot ménager (1) selon l'une quelconque des revendications précédentes,
**caractérisé en ce que** pour la réception de forces de réaction, l'engrenage à vis sans fin (30) présente une contre-roue à vis sans fin (66), l'engrenage de chant à vis sans fin (48) présente une contre-roue droite à dents hélicoïdes (67), resp. l'engrenage conique (65) présente une contre-roue conique (68), laquelle, par rapport à la vis sans fin (27), à la première roue droite à dents hélicoïdes (51), resp. à la première roue conique (63), est respectivement située en face de la roue à vis sans fin (28), en face de la seconde roue droite à dents hélicoïdes (52) resp. en face de la seconde roue conique (64) et entre en prise avec la vis sans fin (27), avec la première roue droite à dents hélicoïdes (51) resp. avec la première roue conique (63).

9. Robot ménager (1) selon l'une quelconque des revendications précédentes,
**caractérisé en ce que** l'engrenage planétaire (54) présente une roue creuse (69) disposée de manière coaxiale par rapport à la roue solaire (49).

10. Robot ménager (1) selon la revendication 9, **caractérisé en ce que** la roue creuse (69) est stationnaire et est raccordée de manière solidaire en rotation à un boîtier d'appareil (2) du robot ménager (1).

11. Robot ménager (1) selon la revendication 9 ou 10, **caractérisé en ce que** la roue creuse (69) est conique.

12. Robot ménager (1) selon l'une quelconque des revendications précédentes,
**caractérisé en ce que** les roues planétaires (55) sont coniques.

13. Robot ménager (1) selon la revendication 11 ou 12, **caractérisé en ce que** l'axe de roue planétaire (56) et l'axe de roue solaire (50) s'entrecroisent dans un angle situé dans une plage de 30° à 80°, notamment dans une plage de 20° à 35°, de préférence dans une plage de 25° à 30°.

14. Robot ménager (1) selon l'une quelconque des revendications précédentes,
**caractérisé en ce qu'**au moins deux, notamment au moins trois, roues planétaires (55), sont prévues.

15. Robot ménager (1) selon l'une quelconque des revendications précédentes,
**caractérisé en ce que** la roue planétaire (55) présente un axe de roue planétaire (56) et **en ce que** le rapport de transmission entre une rotation autour de l'axe de roue solaire (50) et une rotation autour de l'axe de roue planétaire (56) est situé dans une plage de 1 :1 à 1 :10, notamment dans une plage de 1 :2 à 1 :5.

16. Robot ménager (1) selon l'une quelconque des revendications précédentes,
**caractérisé en ce que** le moteur électrique (3) présente une fréquence de rotation nominale maximale située dans une plage de 8 000 rotations par minute à 20 000 rotations par minutes, notamment dans une plage de 10 000 rotations par minute à 15 000 rotations par minute.

17. Robot ménager (1) selon l'une quelconque des revendications précédentes,
**caractérisé en ce que** l'au moins une roue planétaire (55) présente un logement (70) pour un outil (29), notamment un outil pour réduire en purée, mélanger, broyer, pétrir et/ou couper et/ou un fouet batteur resp. fouet mélangeur (74).
